# EUROPEAN PATENT APPLICATION

(11) **EP 3 783 211 A1**
(43) Date of publication of application: **24.02.2021**
(21) Application number: 20191215.1
(22) Date of filing: 14.08.2020
(51) Int. Cl.: F02C 3/113, B64D 27/02, B64D 35/08

(54) **POWER SYSTEM FOR ROTARY WING AIRCRAFT**

(30) Priority: 20.08.2019 US 201916545281
(71) Applicant: Raytheon Technologies Corporation, Farmington, CT 06032 (US)
(72) Inventor: KUPRATIS, Daniel Bernard, Wallingford, CT Connecticut 06492 (US); HANRAHAN, Paul R., Farmington, CT Connecticut 06032 (US)
(74) Representative: Dehns

(57) **Abstract**

A gas turbine engine is disclosed. In various embodiments, the gas turbine engine includes a low speed spool (208); a first compressor (204), a turbine (206) and a generator (210) rotationally coupled via the low speed spool; a high speed spool (216); and a second compressor (212) and a motor (214) rotationally coupled via the high speed spool.

## Description

### FIELD

The present disclosure relates generally to power systems for rotary wing aircraft and, more particularly, to power systems configured for power sharing between engines of a multi-engine rotary wing aircraft.

### BACKGROUND

Rotary wing aircraft (e.g., helicopters) often include a power system comprising two or more turboshaft engines. Each engine is typically connected to a main rotor via a common reduction gearbox, and each engine is typically sized to account for a worst-case scenario where the other engine or engines fail during a transitional phase of flight not associated with normal cruise conditions, such as, for example, during takeoff, landing or hovering. Accordingly, the rated maximum power output of each engine may be significantly greater than that required for normal cruise conditions.

Operating a single engine at a high power output, instead of all engines at a lower power output, may provide for significantly higher fuel efficiency during normal cruise conditions. However, once an engine is throttled back to idle or is otherwise stopped, there may be a not insignificant delay in time to throttle forward or restart the engine. This delay may be exhibited by, for example, sluggishness due to the time required to overcome rotational inertia of the rotating components and to draw in, compress, combust and expand sufficient quantities of air to get the engine running again at operational speeds.

### SUMMARY

A gas turbine engine is disclosed. In various embodiments, the gas turbine engine includes a low speed spool; a first compressor, a turbine and a generator rotationally coupled via the low speed spool; a high speed spool; and a second compressor and a motor rotationally coupled via the high speed spool.

In various embodiments, the motor is configured to receive power from the generator to drive the second compressor. In various embodiments, a storage device is configured to drive the second compressor. In various embodiments, the first compressor is a low pressure compressor and the second compressor is a high pressure compressor, the high pressure compressor configured to compress air received from the low pressure compressor when driven by the motor. In various embodiments, an intra-engine power control is configured to direct power from the generator to the motor. In various embodiments, an inter-engine connection is configured to electrically couple the generator and the motor.

A power system for a rotary wing aircraft is disclosed. In various embodiments, the power system includes a first engine having a first low speed spool, a first low pressure compressor, a first turbine and a first generator rotationally coupled via the first low speed spool, a first high speed spool, and a first high pressure compressor and a first motor rotationally coupled via the first high speed spool; and a second engine having a second low speed spool, a second low pressure compressor, a second turbine and a second generator rotationally coupled via the second low speed spool, a second high speed spool, and a second high pressure compressor and a second motor rotationally coupled via the second high speed spool.

In various embodiments, the first generator is configured to drive the first high pressure compressor via the first motor. In various embodiments, the first generator is configured to drive the second high pressure compressor via the second motor. In various embodiments, the second generator is configured to drive the second high pressure compressor via the second motor.

In various embodiments, a first intra-engine power control is configured to electrically couple the first generator to the first motor. In various embodiments, an inter-engine power control is configured to electrically couple the first generator to the second motor. In various embodiments, a second intra-engine power control is configured to electrically couple the second generator to the second motor. In various embodiments, a storage device is configured to direct power to at least one of the first motor and the second motor.

A method of powering a rotary wing aircraft having a first engine and a second engine is disclosed. In various embodiments, the method includes selectively driving a first high pressure compressor of the first engine via a first motor rotationally coupled to the first high pressure compressor via a first high speed spool; and selectively driving a second high pressure compressor of the second engine via a second motor rotationally coupled to the second high pressure compressor via a second high speed spool.

In various embodiments, selectively driving the first high pressure compressor comprises powering the first motor via a first generator rotationally coupled to a first turbine of the first engine via a first low speed spool. In various embodiments, selectively driving the second high pressure compressor comprises powering the second motor via the first generator. In various embodiments, selectively driving the second high pressure compressor comprises powering the second motor via a second generator rotationally coupled to a second turbine of the second engine via a second low speed spool.

In various embodiments, a first intra-engine power control is configured to electrically couple the first generator to the first motor, an inter-engine power control is configured to electrically couple the first generator to the second motor, and a second intra-engine power control is configured to electrically couple the second generator to the second motor. In various embodiments, a storage device is configured to direct power to at least one of the first motor and the second motor.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a schematic view of a rotary wing aircraft, in accordance with various embodiments;
FIG. 2 is a schematic view of a power system for a rotary wing aircraft having a first engine and a second engine;
FIG. 3 is a schematic view of a power system for a rotary wing aircraft having a first engine and a second engine;
FIGS. 4A, 4B, 4C and 4D are schematic views of a power system for a rotary aircraft operating at different flight conditions; and
FIG. 5 describes various method steps for powering a rotary wing aircraft having a first engine and a second engine, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

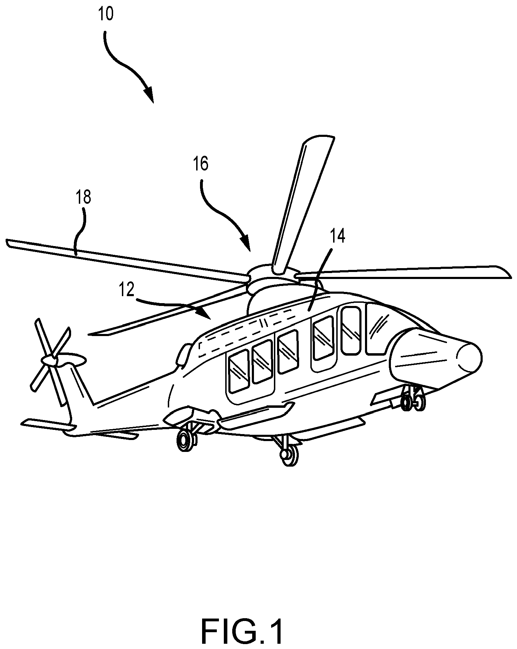

Referring now to FIG. 1, according to various embodiments, a rotary wing aircraft 10 (e.g., a helicopter) may include two or more turboshaft engines (each typically being a gas turbine engine), such as, for example, a first engine 12 (indicated by dashed lines), mounted within a fuselage 14 at a starboard side of the rotary wing aircraft 10, and a second engine (hidden), also mounted within the fuselage 14, but on a port side of the rotary wing aircraft 10, opposite the first engine 12. In various embodiments, the first engine 12 and the second engine are configured to drive a rotor 16 having a plurality of blades 18. In various embodiments, and as described in more detail below, one or both of the first engine 12 and the second engine may be operated at various power levels with respect to the other and may be configured to provide auxiliary power to the other during throttle forward (e.g., during acceleration) or startup operations during various flight operations.

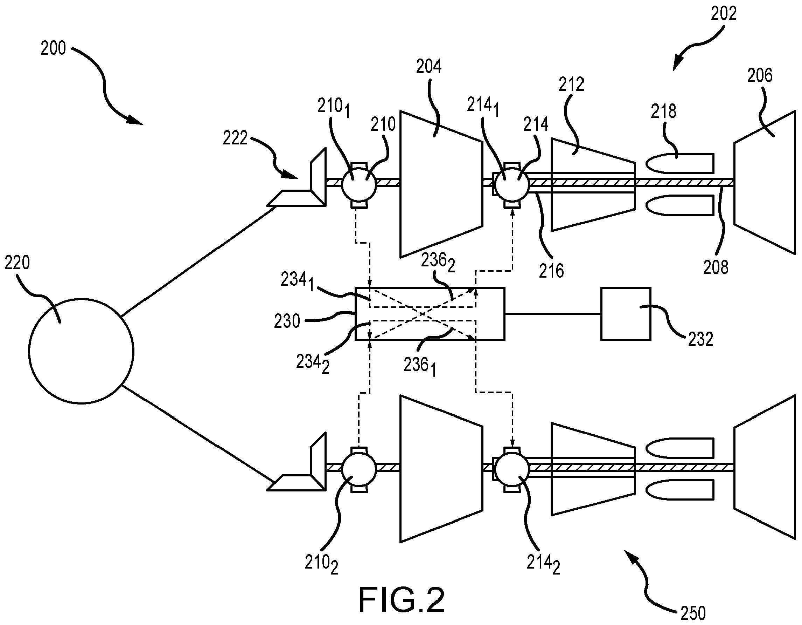

Referring now to FIG. 2, a power system 200 for a rotary wing aircraft, such as, for example, the rotary wing aircraft 10 described above with reference to FIG. 1, is illustrated. In various embodiments, the power system 200 includes a first engine 202 (or a starboard side engine) and a second engine 250 (or a port side engine), similar to the first engine 12 and the second engine described above, also with reference to FIG. 1. While the disclosure herein generally focuses on twin-engine power systems, the disclosure contemplates, in various embodiments, power systems having three or more engines. Further, and for purposes of brevity, the disclosure that follows generally refers to the first engine 202 only, as the components of the second engine 250 and any further engines will generally be similar if not identical.

Referring now to the first engine 202, a low pressure compressor 204 (or a first compressor) is rotationally coupled to a high pressure turbine 206 (or a second compressor) via a low speed spool 208. A generator 210 (or a first generator 2101) is also coupled to the low pressure compressor 204 and the high pressure turbine 206 via the low speed spool 208. The first engine 202 also includes a high pressure compressor 212 rotationally coupled to a motor 214 (or a first motor 2141) via a high speed spool 216. As described further below, the motor 214 is configured to receive power (e.g., electrical power) and use the power to drive the high pressure compressor 212, thereby increasing the pressure of the air received at the output of the low pressure compressor 204 prior to the air being introduced to a combustor 218. The combustor 218 is disposed within the first engine 202 and configured to receive compressed air from the high pressure compressor 212, combust the compressed air with fuel to produce a high-pressure and high-temperature gas stream, and route the gas stream to the high pressure turbine 206, where the gas stream is expanded and used to rotate each of the generator 210, the low pressure compressor 204 and the high pressure turbine 206 via the low speed spool 208. Rotational power from the low speed spool 208 is also used to drive a main gear box 220, which is connected to a rotor, such as, for example, the rotor 16 described above with reference to FIG. 1. Various intervening power transfer systems, such as, for example, a bevel gear 222 may be used, in various embodiments, in extracting the rotational power from the low speed spool 208 and transferring the rotational power to the main gear box 220.

Still referring to FIG. 2, the power system 200 further includes a controller 230 which, in various embodiments, may comprise a full authority digital engine control (FADEC) or, in various embodiments and without loss of generality, be connected to and operated by a FADEC 232 separate from the controller 230. The controller 230 is configured, in various embodiments, to selectively control operation of the motor 214 of the first engine 202 (i.e., the first motor 2141) and a second motor 2142 of the second engine 250 by routing to the first motor 2141 and to the second motor 2142 power generated by one or both of the generator 210 of the first engine 202 (i.e., the first generator 2101) and a second generator 2102 of the second engine 250. As described above and illustrated in FIG. 2, in various embodiments, the operational characteristics of the first generator 2101 and the first motor 2141 and assembly of these two components within the first engine 202 is similar to or identical with the operational characteristics of the second generator 2102 and the second motor 2142 and assembly of these two components within the second engine 250.

By way of example, and with continued reference to FIG. 2, in various embodiments, the controller 230 is configured to route power generated by the first generator 2101 to the first motor 2141 via a first intra-engine connection 2341 or to the second motor 2142 via a first inter-engine connection 2361. As will be discussed further below, in various embodiments or depending on the flight conditions, the controller 230 is configured to route one-hundred percent (100%) of the power generated by the first generator 2101 to either of the first motor 2141 or the second motor 2142. In addition, in various embodiments or depending on the flight conditions, the controller 230 is configured to share the power generated at the first generator 2101 between the first motor 2141 and the second motor 2142. Similarly, in various embodiments, the controller 230 is configured to route power generated by the second generator 2102 to the second motor 2142 via a second intra-engine connection 2342 or to the first motor 2141 via a second inter-engine connection 2362.

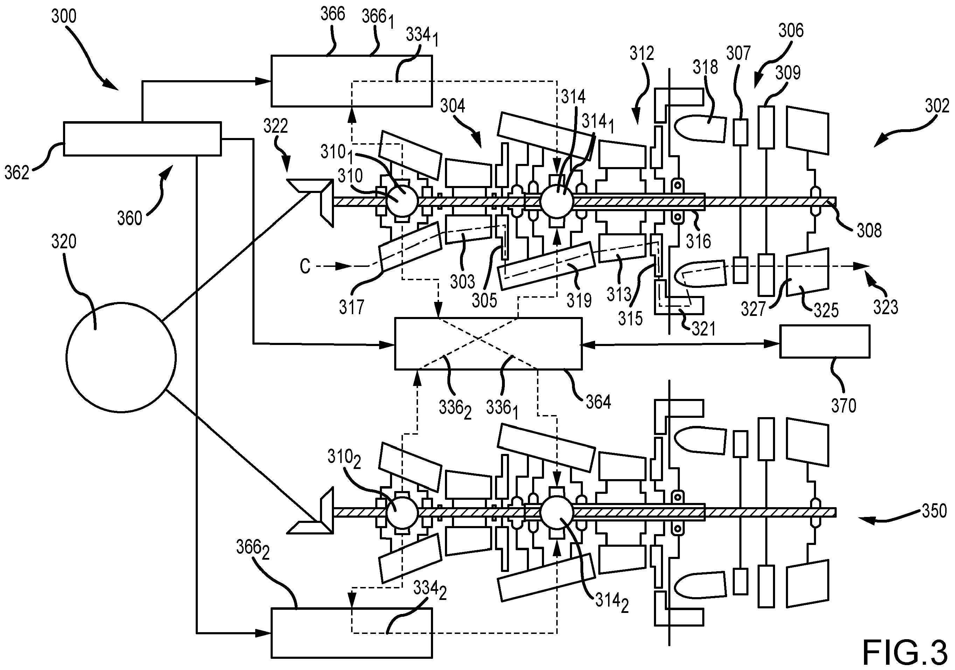

Referring now to FIG. 3, a power system 300 for a rotary wing aircraft is illustrated. The power system 300 is similar to the power system 200 described above with reference to FIG. 2. For example, in various embodiments, the power system 300 includes a first engine 302 (or a starboard side engine) and a second engine 350 (or a port side engine), similar to the first engine 12 and the second engine described above with reference to FIG. 1. Also, similar to the above description and for purposes of brevity, the disclosure that follows generally refers to the first engine 302 only, as the components of the second engine 350 and any further engines will generally be similar if not identical.

Referring now to the first engine 302, a low pressure compressor 304 is rotationally coupled to a high pressure turbine 306 via a low speed spool 308. As illustrated, in various embodiments, the low pressure compressor 304 may include an axial compressor 303 followed downstream by a centrifugal compressor 305, and the high pressure turbine 306 may comprise a two-stage axial turbine having a first stage 307 and a second stage 309. A generator 310 (or a first generator 3101) is also coupled to the low pressure compressor 304 and the high pressure turbine 306 via the low speed spool 308. The first engine 302 also includes a high pressure compressor 312 rotationally coupled to a motor 314 (or a first motor 3141) via a high speed spool 316. As illustrated, in various embodiments, the high pressure compressor 312 may include an axial compressor 313 followed downstream by a centrifugal compressor 315. As illustrated, a core flow path C may be established through the first engine 302. In various embodiments, the core flow path C starts at a first duct 317 (or an inlet duct), passes through the low pressure compressor 304 and the high pressure compressor 312, which may be separated by a second duct 319, and then passes through a pipe diffuser 321 prior to entering the combustor 318. Upon exiting the combustor 318, the core flow C passes through the high pressure turbine 306 and exits the first engine 302 via an exhaust 323 which, in various embodiments, may include or be positioned downstream of an exit guide vane 325 coupled to a static structure 327.

As described further above, the motor 314 is configured to receive power (e.g., electrical power) and use the power to drive the high pressure compressor 312, thereby increasing the pressure of the air received at the output of the low pressure compressor 304 prior to the air being introduced to a combustor 318. The combustor 318 is disposed within the first engine 302 and configured to receive compressed air from the high pressure compressor 312, combust the compressed air with fuel to produce a high-pressure and high-temperature gas stream, and route the gas stream to the high pressure turbine 306, where the gas stream is expanded and used to rotate each of the generator 310, the low pressure compressor 304 and the high pressure turbine 306 via the low speed spool 308. Rotational power from the low speed spool 308 is also used to drive a main gear box 320, which is connected to a rotor, such as, for example, the rotor 16 described above with reference to FIG. 1. Various intervening mechanical, hydraulic or electrical power transfer systems, such as, for example, a bevel gear 322 may be used, in various embodiments, in extracting the rotational power from the low speed spool 308 and transferring the rotational power to the main gear box 320.

Still referring to FIG. 3, the power system 300 further includes a control system 360 which, in various embodiments, may comprise a full authority digital engine control (FADEC) 362 (or a master control). In various embodiments, the control system 360 may include an inter-engine power control 364 and an intra-engine power control 366 (e.g., a first intra-engine power control 3661 coupled to the first engine 302 and a second intra-engine power control 3662 coupled to the second engine 350). Similar to the discussion above with reference to the controller 230, the control system 360 is configured, in various embodiments, to selectively control operation of the motor 314 of the first engine 302 (i.e., the first motor 3141) and a second motor 3142 of the second engine 350 by routing to the first motor 3141 and to the second motor 3142 power generated by one or both of the generator 310 of the first engine 302 (i.e., the first generator 3101) and a second generator 3102 of the second engine 350.

By way of example, and with continued reference to FIG. 3, in various embodiments, the control system 360 (e.g., via the FADEC 362) is configured to route power generated by the first generator 3101 to the first motor 3141 via a first intra-engine connection 3341 or to the second motor 3142 via a first inter-engine connection 3361. Similar to the discussion above, and as discussed further below, in various embodiments or depending on the flight conditions, the control system 360 is configured to route one-hundred percent (100%) of the power generated by the first generator 3101 to either of the first motor 3141 or the second motor 3142. In addition, in various embodiments or depending on the flight conditions, the control system 360 is configured to share the power generated at the first generator 3101 between the first motor 3141 and the second motor 3142. Similarly, in various embodiments, the control system 360 is configured to route power generated by the second generator 3102 to the second motor 3142 via a second intra-engine connection 3342 or to the first motor 3141 via a second inter-engine connection 3362. Additionally, in various embodiments, a storage device 370, such as, for example, a battery or a capacitor, is connected and configured to provide power to one or more of the first intra-engine connection 3341, the second intra-engine connection 3342, the first inter-engine connection 3361 and the second inter-engine connection 3362. In various embodiments, the storage device 370 may be charged via one or both of the first generator 3101 and the second generator 3102 during normal operation of the power system 300.

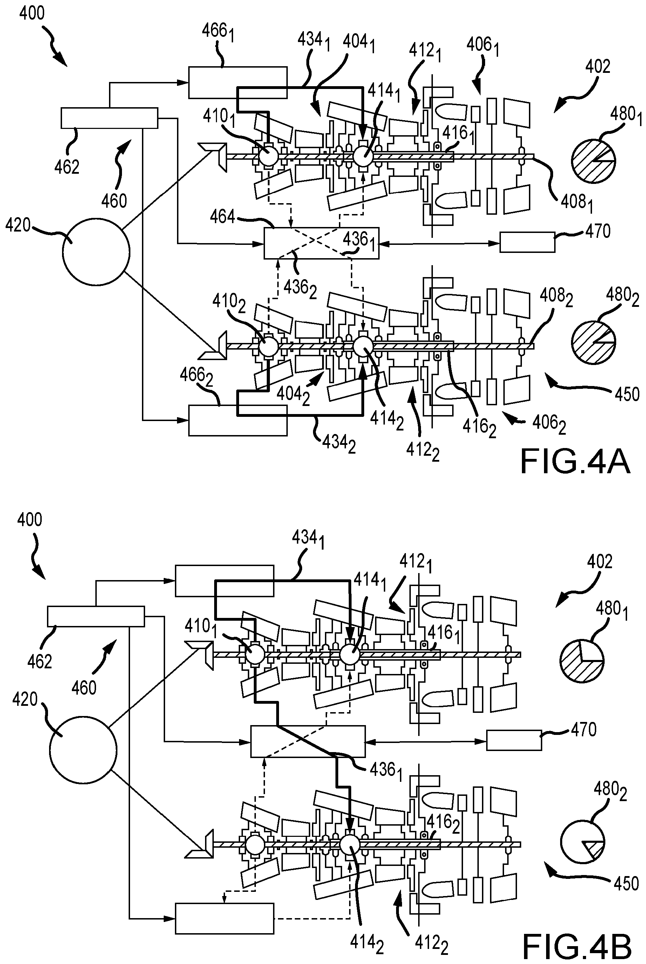

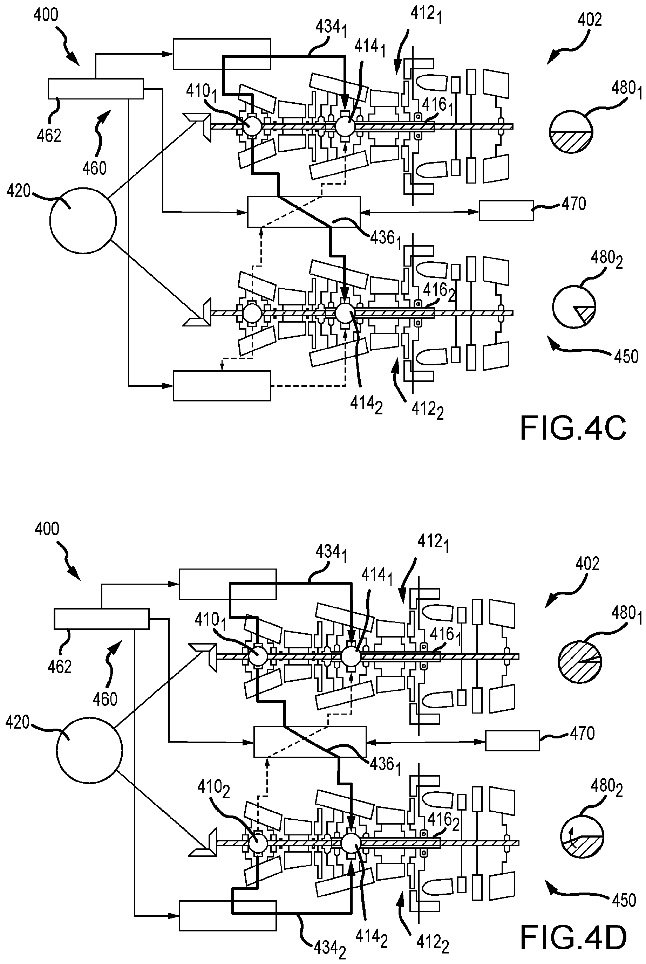

Referring now to FIGS. 4A, 4B, 4C and 4D, operational details of the foregoing description are provided, in accordance with various embodiments. The operational details are provided in reference to a power system 400 which, in various embodiments, is identical to the power system 300 described above with reference to FIG. 3. The power system 400 includes a first engine 402 (or a starboard side engine) and a second engine 450 (or a port side engine) configured to provide rotary power to drive a main gear box 420. The first engine 402 includes a first generator 4101 and a first motor 4141 and the second engine 450 includes a second generator 4102 and a second motor 4142. In each of the figures, the bold lines indicate the applicable intra-engine and inter-engine connections described above for the various flight conditions. These connections include, for example, a first intra-engine connection 4341 and a first inter-engine connection 4361 and a second intra-engine connection 4342 and a second inter-engine connection 4362. Without loss of generality, such connections may, in various embodiments, be considered electrical power cables where the various motors and generators are electrical devices. Or, in various embodiments, such connections may be considered hydraulic circuits where the various motors and generators are hydraulic pumps or the like. While the disclosure contemplates various types of power (e.g., electrical or mechanical or hydraulic power or modes of power) in the motors and generators described herein and above, the various embodiments described herein may be considered from the perspective of electrical power. Similar to the power system 300 described above, the first motor 4141 is configured to power a first high pressure compressor 4121 via a first high speed spool 4161 within the first engine 402, while the second motor 4142 is configured to power a second high pressure compressor 4122 via a second high speed spool 4162 within the second engine 450. A first low speed spool 4081 rotationally couples a first low pressure compressor 4041 and a first turbine 4061 to the first generator 4101, while a second low speed spool 4082 rotationally couples a second low pressure compressor 4042 and a second turbine 4062 to the second generator 4102.

Still referring generally to each of FIGS. 4A-4D, the gauge-like symbols on the right side of each engine in the figures represent a power output level of that particular engine while operating at the indicated flight condition. The gauge-like symbols in the figures include a first power output gauge 4801, representing the power output of the first engine 402 and a second power output gauge 4802, representing the power output of the second engine 450. Also similar to the power system 300 described above, the power system 400 described herein includes a control system 460, which includes a FADEC 462, an inter-engine power control 464, a first intra-engine power control 4661 coupled to the first engine 402 and a second intra-engine power control 4662 coupled to the second engine 450. A storage device 470, such as, for example, a battery or a capacitor, is also connected and configured to provide power to one or more of the first intra-engine connection 4341, the second intra-engine connection 4342, the first inter-engine connection 4361 and the second inter-engine connection 4362.

Referring now to FIG. 4A, a schematic view of the power system 400 is illustrated, where the power system 400 is operating at a first flight condition that benefits from near full-power from both the first engine 402 and the second engine 450. In various embodiments, the first flight condition may represent, for example, conditions experienced during takeoff, landing or low-altitude hover (e.g., while close to the ground or a rooftop or similar structure). As indicated by the first power output gauge 4801 and the second power output gauge 4802, both the first engine 402 and the second engine 450, respectively, are operating near full-power (e.g., ninety percent (90%) of full power). To achieve the full-power output of both engines, the control system 460 (or the FADEC 462) activates the first intra-engine connection 4341, such that the first generator 4101 (in combination with, in various embodiments, the storage device 470) supplies power to the first motor 4141, thereby powering the first high pressure compressor 4121 via the first high speed spool 4161. Similarly, the control system 460 activates the second intra-engine connection 4342, such that the second generator 4102 (in combination with, in various embodiments, the storage device 470) supplies power to the second motor 4142, thereby powering the second high pressure compressor 4122 via the second high speed spool 4162. In this configuration, both the first engine 402 and the second engine are providing near full power to drive the main gear box 420.

Referring now to FIG. 4B, a schematic view of the power system 400 is illustrated, where the power system 400 is operating at a second flight condition that benefits from near full-power from the first engine 402 and reduced power from the second engine 450. In various embodiments, the second flight condition may represent, for example, a high power cruise condition (e.g., a condition where speed over ground is more important than fuel economy). As indicated by the first power output gauge 4801 and the second power output gauge 4802, the first engine 402 is operating at a power level of approximately seventy-five percent (75%) of full power, while the second engine 450 has been throttled back to approximately twenty percent (20%) of full power. In various embodiments, the second engine 450 may, at this power level, be considered in a standby mode, where the engine is running, but not contributing appreciable power to drive the main gear box 420. To achieve the power levels described above for the first engine 402 and the second engine 450, the control system 460 (or the FADEC 462) activates the first intra-engine connection 4341, such that the first generator 4101 (in combination with, in various embodiments, the storage device 470) supplies power to the first motor 4141, thereby powering the first high pressure compressor 4121 via the first high speed spool 4161. Similarly, the control system 460 activates the first inter-engine connection 4361, such that a portion of the power generated by the first generator 4101 (in combination with, in various embodiments, the storage device 470) supplies power to the second motor 4142, thereby powering the second high pressure compressor 4122 via the second high speed spool 4162. In this configuration, the first engine 402 provides a portion of the power generated by the first generator 4101 to the first motor 4141, with the remaining power going to the second motor 4142 in order to maintain the standby mode of the second engine 450.

Referring now to FIG. 4C, a schematic view of the power system 400 is illustrated, where the power system 400 is operating at a third flight condition that benefits from near half-power from the first engine 402 and reduced power from the second engine 450. In various embodiments, the third flight condition may represent, for example, a fuel-efficient cruise condition (e.g., a condition where fuel economy is more important than speed over ground). As indicated by the first power output gauge 4801 and the second power output gauge 4802, the first engine 402 is operating at a power level of approximately fifty percent (50%) of full power, while the second engine 450 has been throttled back to approximately twenty percent (20%) of full power - e.g., the standby mode described above - where the engine is running, but not contributing appreciable power to drive the main gear box 420. To achieve the power levels described above for the first engine 402 and the second engine 450, the control system 460 (or the FADEC 462) activates the first intra-engine connection 4341, such that the first generator 4101 (in combination with, in various embodiments, the storage device 470) supplies power to the first motor 4141, thereby powering the first high pressure compressor 4121 via the first high speed spool 4161. Similarly, the control system 460 activates the first inter-engine connection 4361, such that a portion of the power generated by the first generator 4101 (in combination with, in various embodiments, the storage device 470) supplies power to the second motor 4142, thereby powering the second high pressure compressor 4122 via the second high speed spool 4162. In this configuration, the first engine 402 provides a portion of the power generated by the first generator 4101 to the first motor 4141, with the remaining power going to the second motor 4142 in order to maintain the standby mode of the second engine 450. One difference between the modes of operation described with reference to FIGS. 4B and 4C is the flow rate of fuel provided to the first engine 402 in FIG. 4B is reduced to that of FIG. 4C.

Referring now to FIG. 4D, a schematic view of the power system 400 is illustrated, where the power system 400 is operating at a fourth flight condition that benefits from near full-power from the first engine 402 and near half-power from the second engine 450. In various embodiments, the fourth flight condition may represent, for example, a rapid acceleration or spool-up condition (e.g., a condition where the second engine is initially at the second or the third flight condition described above, but is transitioning to near full-power). Thus, the fourth flight condition may, in various embodiments, be considered a transient condition, where the first, second and third flight conditions may, in various embodiments, be considered steady state conditions. As indicated by the first power output gauge 4801 and the second power output gauge 4802, the first engine 402 is operating at a power level of approximately ninety-five percent (95%) of full power, while the second engine 450 has been throttled forward to approximately forty-five percent (45%) of full power, which power level may continue to increase during the transient described above. To achieve the power levels described above for the first engine 402 and the second engine 450, the control system 460 (or the FADEC 462) activates the first intra-engine connection 4341, such that the first generator 4101 (in combination with, in various embodiments, the storage device 470) supplies power to the first motor 4141, thereby powering the first high pressure compressor 4121 via the first high speed spool 4161. Similarly, the control system 460 activates the first inter-engine connection 4361, such that a portion of the power generated by the first generator 4101 (in combination with, in various embodiments, the storage device 470) supplies power to the second motor 4142, thereby powering the second high pressure compressor 4122 via the second high speed spool 4162. At the same time, the control system 460 activates the second intra-engine connection 4342, such that the second generator 4102 (in combination with, in various embodiments, the storage device 470) supplies power to the second motor 4142, thereby powering the second high pressure compressor 4122 via the second high speed spool 4162.

In this configuration, the first engine 402 provides a portion of the power generated by the first generator 4101 to the first motor 4141, with the remaining power going to the second motor 4142. Also powering the second motor 4142 is power received from the second generator 4102 (as well as the storage device 470, in various embodiments). In various embodiments, the control system 460 may increase the power received at the second motor 4142 via the first generator 4101 over that received during operation at the second or third flight conditions described above. Delivering power to the second motor 4142 from each of the first generator 4101, the second generator 4102 and, in various embodiments, the storage device 470, facilitates rapid spool-up of the second high pressure compressor 4122, thereby boosting the flow rate and pressure level of the air entering a combustor of the second engine 450. In various embodiments, the rapid spool-up reduces or even alleviates a portion of the sluggishness that may otherwise occur during acceleration of one of the engines from a standby mode (or even a shutdown mode) to a full-power or near full-power mode of operation - e.g., to the first flight condition described above with reference to FIG. 4A from the second flight condition or the third flight condition described above with reference to FIGS. 4B and 4C.

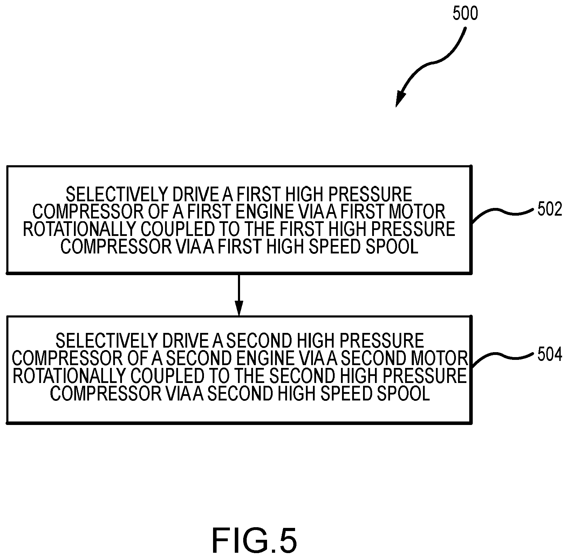

Referring now to FIG. 5, a method 500 of powering a rotary wing aircraft having a first engine and a second engine is described. In various embodiments, a first step 502 includes selectively driving a first high pressure compressor of the first engine via a first motor rotationally coupled to the first high pressure compressor via a first high speed spool. A second step 504 includes selectively driving a second high pressure compressor of the second engine via a second motor rotationally coupled to the second high pressure compressor via a second high speed spool. Consistent with the various embodiments, described above, it will be appreciated the term "selectively driving" includes embodiments where either or both of the first high pressure compressor or the second high pressure compressor may be operating at any particular time, depending on the particular flight condition in which the rotary wing aircraft is operating.

In various embodiments, selectively driving the first high pressure compressor comprises powering the first motor via a first generator rotationally coupled to a first turbine of the first engine via a first low speed spool. In various embodiments, selectively driving the second high pressure compressor comprises powering the second motor via the first generator. In various embodiments, selectively driving the second high pressure compressor comprises powering the second motor via a second generator rotationally coupled to a second turbine of the second engine via a second low speed spool.

In various embodiments, a first intra-engine power control is configured to electrically couple the first generator to the first motor, an inter-engine power control is configured to electrically couple the first generator to the second motor, and a second intra-engine power control is configured to electrically couple the second generator to the second motor. In various embodiments, a storage device is configured to direct power to at least one of the first motor and the second motor.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A gas turbine engine, comprising:
a low speed spool;
a first compressor, a turbine and a generator rotationally coupled via the low speed spool;
a high speed spool; and
a second compressor and a motor rotationally coupled via the high speed spool.

2. The gas turbine engine of claim 1, wherein the motor is configured to receive power from the generator to drive the second compressor.

3. The gas turbine engine of claim 2, further comprising a storage device configured to drive the second compressor.

4. The gas turbine engine of claim 2 or 3, wherein the first compressor is a low pressure compressor and the second compressor is a high pressure compressor, the high pressure compressor configured to compress air received from the low pressure compressor when driven by the motor.

5. The gas turbine engine of any preceding claim, further comprising an intra-engine power control configured to direct power from the generator to the motor.

6. The gas turbine engine of claim 5, further comprising an intra-engine connection configured to electrically couple the generator and the motor.

7. A power system for a rotary wing aircraft, comprising:
a first engine having
a first low speed spool,
a first low pressure compressor, a first turbine and a first generator rotationally coupled via the first low speed spool,
a first high speed spool, and
a first high pressure compressor and a first motor rotationally coupled via the first high speed spool; and
a second engine having
a second low speed spool,
a second low pressure compressor, a second turbine and a second generator rotationally coupled via the second low speed spool,
a second high speed spool, and
a second high pressure compressor and a second motor rotationally coupled via the second high speed spool.

8. The power system of claim 7, wherein the first generator is configured to drive the first high pressure compressor via the first motor.

9. The power system of claim 8, wherein the first generator is configured to drive the second high pressure compressor via the second motor.

10. The power system of claim 9, wherein the second generator is configured to drive the second high pressure compressor via the second motor.

11. The power system of any of claims 7 to 10, further comprising a first intra-engine power control configured to electrically couple the first generator to the first motor.

12. The power system of any of claims 7 to 11, further comprising an inter-engine power control configured to electrically couple the first generator to the second motor.

13. The power system of claim 12, further comprising a second intra-engine power control configured to electrically couple the second generator to the second motor,
optionally further comprising a storage device configured to direct power to at least one of the first motor and the second motor.

14. A method of powering a rotary wing aircraft having a first engine and a second engine, comprising:
selectively driving a first high pressure compressor of the first engine via a first motor rotationally coupled to the first high pressure compressor via a first high speed spool; and
selectively driving a second high pressure compressor of the second engine via a second motor rotationally coupled to the second high pressure compressor via a second high speed spool.

15. The method of claim 14, wherein selectively driving the first high pressure compressor comprises powering the first motor via a first generator rotationally coupled to a first turbine of the first engine via a first low speed spool,
wherein, optionally, selectively driving the second high pressure compressor comprises powering the second motor via the first generator, and / or
wherein, optionally, selectively driving the second high pressure compressor comprises powering the second motor via a second generator rotationally coupled to a second turbine of the second engine via a second low speed spool, and / or
wherein, optionally, a first intra-engine power control is configured to electrically couple the first generator to the first motor, an inter-engine power control is configured to electrically couple the first generator to the second motor, and a second intra-engine power control is configured to electrically couple the second generator to the second motor, and / or
wherein, optionally, a storage device is configured to direct power to at least one of the first motor and the second motor.
